# EUROPEAN PATENT APPLICATION

(11) **EP 4 475 378 A1**
(43) Date of publication of application: **11.12.2024**
(21) Application number: 23177638.6
(22) Date of filing: 06.06.2023
(51) Int. Cl.: H02J 7/00, H04L 9/32, B60L 53/80

(54) **BATTERY SYSTEMS AND BATTERY MANAGEMENT SERVER**

(71) Applicant: NXP B.V., 5656 AG Eindhoven (NL)
(72) Inventor: Haslinger, Dorian, 5656 AG Eindhoven (NL); Khullar, Naman, 5656 AG Eindhoven (NL); Manninger, Marc, 5656 AG Eindhoven (NL)
(74) Representative: Krott, Michel

(57) **Abstract**

In accordance with a first aspect of the present disclosure, a first battery system is provided, comprising: a plurality of battery modules; a battery management unit operatively coupled to the battery modules, wherein the battery management unit contains a secure element; wherein the battery management unit is configured to receive a signed request from an external server, wherein the signed request is a request for decoupling at least one of the battery modules from the system, and wherein the battery management unit is configured to verify the signed request using a public key stored in the secure element. Further aspects are related to a method of configuring the first battery system, a second battery system, a method of configuring the second battery system, a battery management server, and a method of operating the battery management server.

## Description

### TECHNICAL FIELD

The present disclosure relates to a first battery system, a second battery system, and to corresponding methods of configuring a first battery system and a second battery system. Furthermore, the present disclosure relates to a battery management server, and to a corresponding method of operating a battery management server.

### BACKGROUND

Battery modules may be used in different systems and applications. A battery module may be defined as a component of a battery pack, which includes one or more battery cells as well as a battery module controller which is coupled to said battery cells. For example, electric vehicles typically contain battery packs, which in turn contain a plurality of battery modules. Furthermore, battery modules may be used in smart home environments. It is desirable to enable reusing such battery modules. For example, when battery modules reach a certain age they can no longer be used in an electric vehicle, but they may still be used in a smart home. In this reuse scenario, it is important that the reuse is secure. Furthermore, it may be important that the integrity of battery-specific data (e.g., lifecycle, re-charging cycles, state-of-health, manufacturer) can be ensured. However, it is currently not possible to ensure a secure, authorized reuse of battery modules. Thus, stolen batteries could for example easily be reused in a thief's smart home battery system. Furthermore, current solutions also do not ensure the integrity of battery-specific data for a trusted reuse.

### SUMMARY

In accordance with a first aspect of the present disclosure, a first battery system is provided, comprising: a plurality of battery modules; a battery management unit operatively coupled to the battery modules, wherein the battery management unit contains a secure element; wherein the battery management unit is configured to receive a signed request from an external server, wherein the signed request is a request for decoupling at least one of the battery modules from the system, and wherein the battery management unit is configured to verify the signed request using a public key stored in the secure element.

In one or more embodiments, the signed request has been encrypted by the external server, and the battery management unit is further configured to decrypt the request using a decryption key stored in the secure element.

In one or more embodiments, the battery management unit is further configured to transmit condition information to the external server, wherein the condition information is indicative of a condition of one or more of said battery modules, and wherein the battery management unit has read said condition information from secure elements contained in said battery modules.

In one or more embodiments, the condition information includes data indicative of a lifecycle, data indicative of re-charging cycles, data indicative of a state of health of the battery modules, and/or data indicative of a manufacturer of the battery modules.

In one or more embodiments, the battery management unit is further configured to receive cryptographic keys and/or cryptographic certificates from the external server, and the battery management unit is configured to store the cryptographic keys and/or cryptographic certificates in a secure element of the at least one of the battery modules to be decoupled.

In accordance with a second aspect of the present disclosure, a method of configuring a first battery system is conceived, comprising: providing the system with a plurality of battery modules; providing the system with a battery management unit operatively coupled to the battery modules, wherein the battery management unit contains a secure element; wherein the battery management unit is configured to receive a signed request from an external server, wherein the signed request is a request for decoupling at least one of the battery modules from the system, and wherein the battery management unit is configured to verify the signed request using a public key stored in the secure element.

In accordance with a third aspect of the present disclosure, a second battery system, comprising: a plurality of battery modules; a battery management unit operatively coupled to the battery modules; wherein the battery management unit is configured to detect that a new battery module is inserted into the system, wherein the battery management unit is configured to read, upon or after said detection, an identifier from a secure element contained in said new battery module, and wherein the battery management unit is configured to transmit said identifier to an external server.

In one or more embodiments, the battery management unit is configured to receive, in response to transmitting said identifier, cryptographic keys and/or cryptographic certificates, and the battery management unit is configured to couple the new battery module to the system using said cryptographic keys and/or cryptographic certificates.

In one or more embodiments, the cryptographic keys and/or cryptographic certificates have been pre-provisioned in the secure element of the new battery module by the external server.

In one or more embodiments, the battery management unit is further configured to transmit condition information to be verified to the external server, wherein the condition information is indicative of a condition of the new battery module.

In one or more embodiments, the battery management unit is configured to couple the new battery module to the system after receiving a positive verification result from the external server, wherein said positive verification result indicates that the condition information matches an expected condition.

In accordance with a fourth aspect of the present disclosure, a method of configuring a second battery system is conceived, comprising: providing the system with a plurality of battery modules; providing the system with a battery management unit operatively coupled to the battery modules; wherein the battery management unit is configured to detect that a new battery module is inserted into the system, wherein the battery management unit is configured to read, upon or after said detection, an identifier from a secure element contained in said new battery module, and wherein the battery management unit is configured to transmit said identifier to an external server.

In accordance with a fifth aspect of the present disclosure, a battery management server is provided, configured to: transmit a signed request to an external first battery system, wherein said signed request is a request for decoupling at least one of a plurality of battery modules from the first battery system; transmit cryptographic keys and/or cryptographic certificates to an external second battery system, wherein said cryptographic keys and/or cryptographic certificates enable the second battery system to couple battery modules which have been decoupled from the first battery system to the second battery system.

In accordance with a sixth aspect of the present disclosure, a method of operating a battery management server is conceived, comprising: transmitting a signed request to an external first battery system, wherein said signed request is a request for decoupling at least one of a plurality of battery modules from the first battery system; transmitting cryptographic keys and/or cryptographic certificates to an external second battery system, wherein said cryptographic keys and/or cryptographic certificates enable the second battery system to couple battery modules which have been decoupled from the first battery system to the second battery system.

### DESCRIPTION OF DRAWINGS

Embodiments will be described in more detail with reference to the appended drawings.
Fig. 1 shows an example of an electric vehicle.
Fig. 2 shows an example of a smart home.
Fig. 3A shows an illustrative embodiment of a battery management architecture.
Fig. 3B shows an illustrative embodiment of a method of configuring a first battery system.
Fig. 3C shows an illustrative embodiment of a method of configuring a second battery system.
Fig. 3D shows an illustrative embodiment of a method of operating a battery management server.
Fig. 4 shows another illustrative embodiment of a battery management architecture.
Fig. 5 shows different roles in a public key infrastructure scheme.

### DESCRIPTION OF EMBODIMENTS

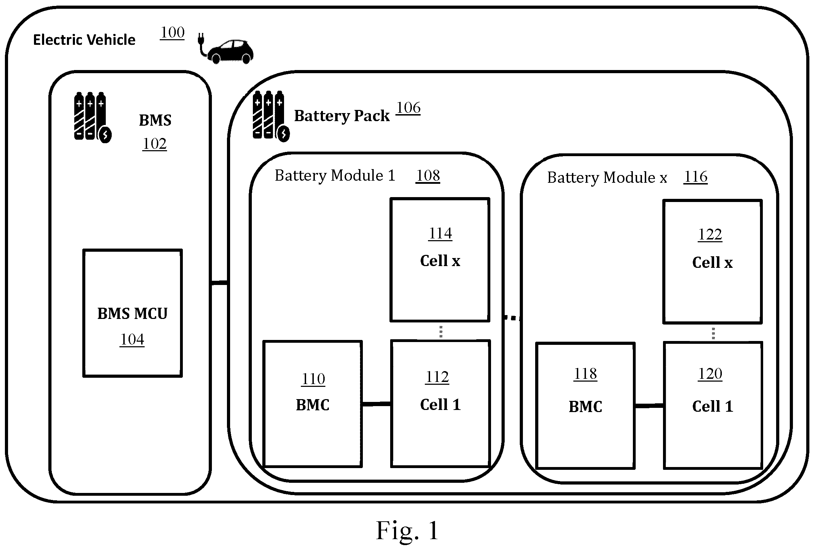

**Fig. 1** shows an example of an electric vehicle 100. The vehicle 100 comprises a battery pack 106 and a battery management system 102, which are operatively coupled to each other. The battery pack 106 comprises two or more battery modules 108, 116. Each of the battery modules 108, 116 comprises two or more battery cells 112, 114, 120, 122 and a battery module controller 110, 118 operatively coupled to the battery cells 112, 114. Furthermore, the battery management system 102 comprises a microcontroller 104. It is desirable to enable reusing the battery modules 108, 116. For example, when the battery modules 108, 116 reach a certain age they can no longer be used in the electric vehicle 100, but they may still be used in another system or application, for example in a smart home.

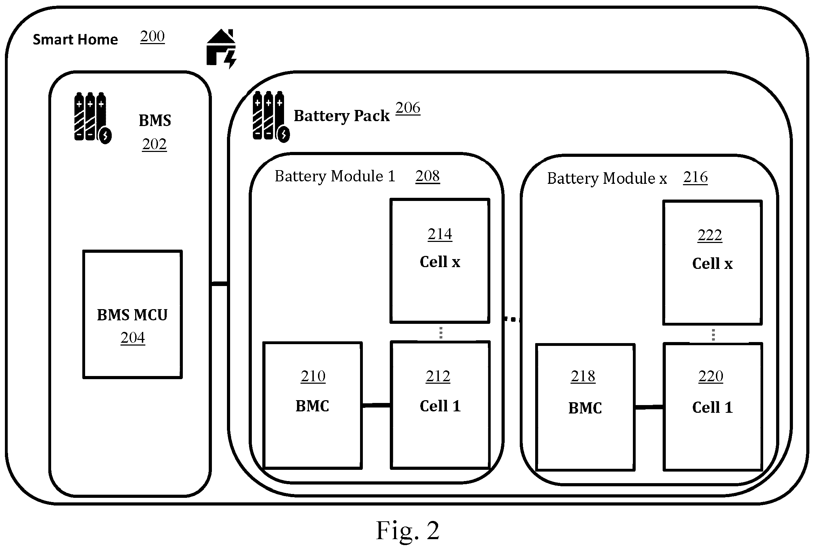

**Fig. 2** shows an example of a smart home 200. The smart home 200 comprises a battery pack 206 and a battery management system 202, which are operatively coupled to each other. The battery pack 206 comprises two or more battery modules 208, 216. Each of the battery modules 208, 216 comprises two or more battery cells 212, 214, 220, 222 and a battery module controller 210, 218 operatively coupled to the battery cells 212, 214, 220, 222. Furthermore, the battery management system 202 comprises a microcontroller 204. The battery modules 208, 216 may be modules that have been used in another system or application, for example as a power source for an electric vehicle. However, it is currently not possible to ensure a secure, authorized reuse of battery modules. Furthermore, it is currently not possible to ensure the integrity of battery-specific data for a trusted reuse. More specifically, battery modules may easily be replaced or manipulated by an unauthorized party. Furthermore, the anti-theft protection is limited. It is noted that counterfeit batteries can be a safety risk (e.g., batteries may catch fire).

Now discussed are battery systems, corresponding methods of configuring battery systems, a battery management server, and a corresponding method of operating a battery management server, that facilitate a secure, authorized reuse of battery modules. The systems, server and corresponding methods may be used in different contexts. For example, they may facilitate a secure transfer of battery modules from an electric car to a smart home environment. In another example, they may facilitate a secure transfer of battery modules from an e-scooter to a portable power bank with a large capacity. The skilled person will appreciate that other use cases may be envisaged as well.

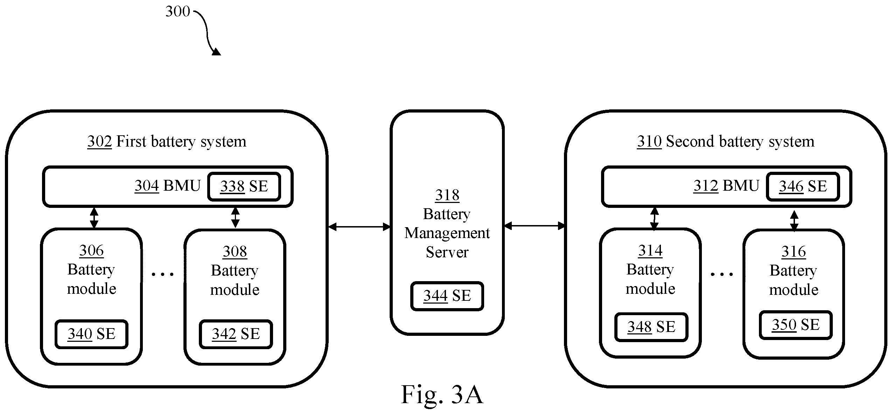

**Fig. 3A** shows an illustrative embodiment of a battery management architecture 300. The architecture 300 includes a first battery system 302, a second battery system 310, and a battery management server 318. The first battery system 302 comprises a plurality of battery modules 306, 308 and a battery management unit 304 (e.g., a so-called battery management system), which are operatively coupled to each other. The battery management unit 304 contains a secure element 338. Furthermore, the battery management unit 304 is configured to receive a signed request from the battery management server 318. In particular, the signed request is a request for decoupling at least one of the battery modules 306, 308 from the first battery system 302. Furthermore, the battery management unit 304 is configured to verify the signed request using a public key stored in the secure element 338. In this way, the authenticity of requests to decouple the battery modules 306, 308 - more specifically of requests sent with the intention to reuse the battery modules 306, 308 in another system or application - may easily be verified. This, in turn, facilitates a secure, authorized reuse of the battery modules 306, 308. It is noted that the term "decoupling" may refer to unpairing the battery modules 306, 308 from the first battery system 302. Furthermore, it is noted that a secure element may be defined as a tamper-resistant integrated circuit with installed or pre-installed applications, which have a prescribed functionality and a prescribed level of security. Furthermore, a secure element may implement security functions, such as cryptographic functions and authentication functions.

The signed request may have been encrypted by the battery management server 318. In that case, the battery management unit 304 may be further configured to decrypt the request using a decryption key stored in the secure element 338. In this way, the level of security may be increased, since it will be more difficult to manipulate the request. Furthermore, the battery management unit 304 may be further configured to transmit condition information to the battery management server 318. This condition information may be indicative of a condition of one or more of the battery modules 306, 308. In particular, the battery management unit 304 may have read the condition information from secure elements 340, 342 contained in said battery modules 306, 308. In this way, the first battery system 302 may provide information to the battery management server 318, which is relevant for a proper reuse of the battery modules 306, 308. For example, relevant condition information may include data indicative of a lifecycle, data indicative of re-charging cycles, data indicative of a state of health of the battery modules, and/or data indicative of a manufacturer of the battery modules 306, 308. It is noted that the term "lifecycle" may refer to one or more of the following parameters: the age of the battery modules, one or more previous applications in which the battery modules have been used, how the battery modules have been used (for example, whether or not they have always been used in a high-performance mode), and other relevant parameters.

The battery management unit 304 may be further configured to receive cryptographic keys and/or cryptographic certificates from the battery management server 318. These cryptographic keys and/or cryptographic certificates may have been stored securely in a secure element 344 comprised in the battery management server 318. In that case, the battery management unit 304 may be configured to store the cryptographic keys and/or cryptographic certificates in a secure element 340, 342 of the battery module or modules 306, 308 to be decoupled. In this way, the battery modules 306, 308 that are decoupled are prepared for use in another, second battery system. More specifically, inserting the cryptographic keys and/or cryptographic certificates in a secure element 340, 342 of said modules 306, 308 makes it easier for the second battery system to verify the authenticity of the modules 306, 308.

The second battery system 310 comprises a plurality of battery modules 314, 316 and a battery management unit 312 (e.g., a battery management system), which are operatively coupled to each other. The battery management unit 312 is configured to detect that a new battery module (not shown) is inserted into the system. Furthermore, the battery management unit 312 is configured to read, upon or after said detection, an identifier from a secure element contained in said new battery module, and to transmit said identifier to the battery management server 318. In this way, the battery management server 318 may be triggered to provide information about the inserted battery module to the second battery system 310. For instance, said information may enable the battery management unit 312 of the second battery system 310 to authenticate the inserted battery module. This, in turn, facilitates a secure, authorized reuse of the inserted battery module.

The battery management unit 312 of the second battery system 310 may be configured to receive, in response to transmitting said identifier, cryptographic keys and/or cryptographic certificates from the battery management server 318. In that case, the battery management unit 312 may be configured to couple the new battery module to the system using said cryptographic keys and/or cryptographic certificates. In this way, the authenticity of the inserted new battery module may easily be verified. This, in turn, further facilitates a secure, authorized reuse of the inserted battery module. It is noted that the term "coupling" may refer to pairing the new battery module to the second battery system 310. In a practical implementation, the cryptographic keys and/or cryptographic certificates have been pre-provisioned in the secure element of the new battery module by the battery management server 318. Alternatively, the cryptographic keys and/or cryptographic certificates, as well as other customer-specific and application-specific data, may be written into the secure element during the manufacturing of said element. For example, the secure element manufacturer may flash credentials into the secure element in a Common Criteria (CC)-certified manufacturing location and process, by applying a trust provisioning service. The provisioning may also be performed in a two-step approach, according to which credentials are written into the secure element by its manufacturer, and subsequently linked to a battery module by the battery management server 318.

The battery management unit 312 of the second battery system 310 may be further configured to transmit condition information to be verified to the battery management server 318, wherein the condition information is indicative of a condition of the new battery module. Thus, the battery management server 318 may verify whether the inserted battery module meets a predefined condition using the information transmitted by the battery management unit 312. It is noted that the condition information may be embodied as battery-specific data, whose integrity may be verified by the battery management server 318. Thus, by transmitting the condition information to the battery management server 318, its integrity may be ensured. Examples of the battery-specific data are data indicative of a lifecycle, data indicative of re-charging cycles, data indicative of a state of health of the inserted battery module, and/or data indicative of a manufacturer of the inserted battery module. Furthermore, the battery management unit 312 may be configured to couple the new battery module to the second battery system 310 after receiving a positive verification result from the battery management server 318, wherein said positive verification result indicates that the condition information matches an expected condition. In this way, it may be ensured that only battery modules that meet the predefined condition are coupled to the second battery system 310.

The battery management server 318 is configured to transmit a signed request to the first battery system 302, wherein said signed request is a request for decoupling at least one of a plurality of battery modules 306, 308 from the first battery system 302. Furthermore, the battery management server 318 is configured to transmit cryptographic keys and/or cryptographic certificates to the second battery system 310, wherein said cryptographic keys and/or cryptographic certificates enable the second battery system 310 to couple battery modules 306, 308 which have been decoupled from the first battery system 302 to the second battery system 310. In this way, a secure, authorized reuse of the battery modules 306, 308 in the second battery system 310 is facilitated.

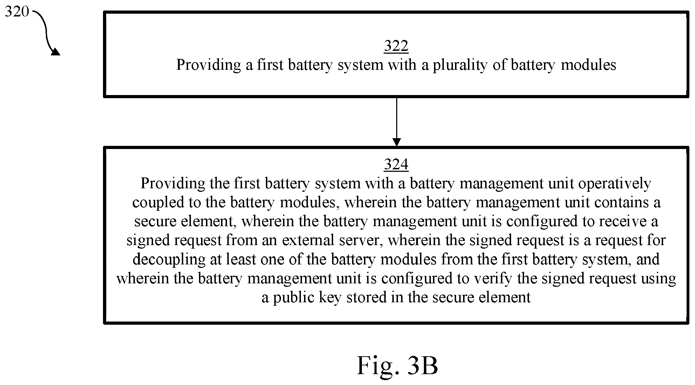

**Fig. 3B** shows an illustrative embodiment of a method 320 of configuring a first battery system. The method 320 comprises the following steps. At 322, the first battery system is provided with a plurality of battery modules. Furthermore, at 324, the first battery system is provided with a battery management unit operatively coupled to the battery modules, wherein the battery management unit contains a secure element, wherein the battery management unit is configured to receive a signed request from an external server (i.e., a battery management server), wherein the signed request is a request for decoupling at least one of the battery modules from the first battery system, and wherein the battery management unit is configured to verify the signed request using a public key stored in the secure element.

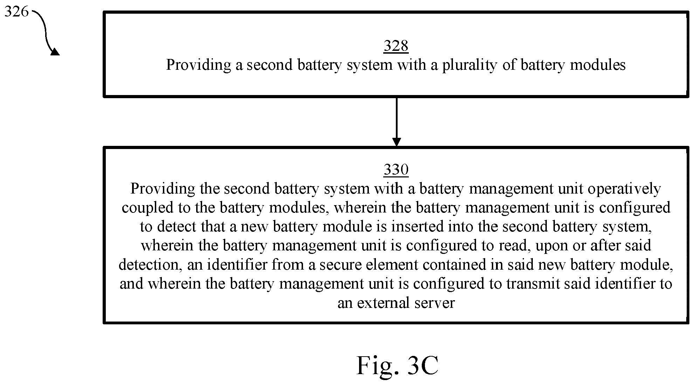

**Fig. 3C** shows an illustrative embodiment of a method 326 of configuring a second battery system. The method 326 comprises the following steps. At 328, the second battery system is provided with a plurality of battery modules. Furthermore, at 330, the second battery system is provided with a battery management unit operatively coupled to the battery modules, wherein the battery management unit is configured to detect that a new battery module is inserted into the second battery system, wherein the battery management unit is configured to read, upon or after said detection, an identifier from a secure element contained in said new battery module, and wherein the battery management unit is configured to transmit said identifier to an external server (i.e., a battery management server).

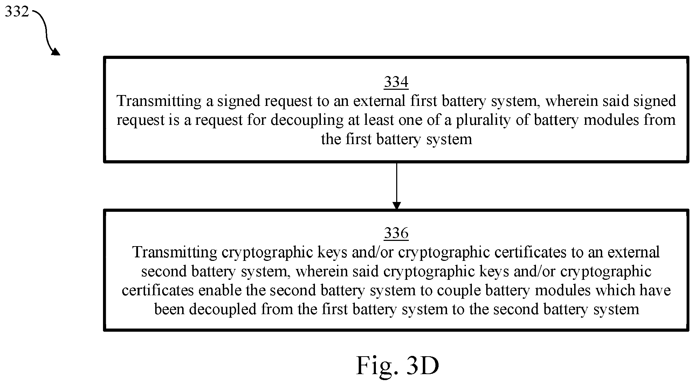

**Fig. 3D** shows an illustrative embodiment of a method 332 of operating a battery management server. The method 332 comprises the following steps. At 334, the battery management server transmits a signed request to an external first battery system, wherein said signed request is a request for decoupling at least one of a plurality of battery modules from the first battery system. Furthermore, at 336, the battery management server transmits cryptographic keys and/or cryptographic certificates to an external second battery system, wherein said cryptographic keys and/or cryptographic certificates enable the second battery system to couple battery modules which have been decoupled from the first battery system to the second battery system.

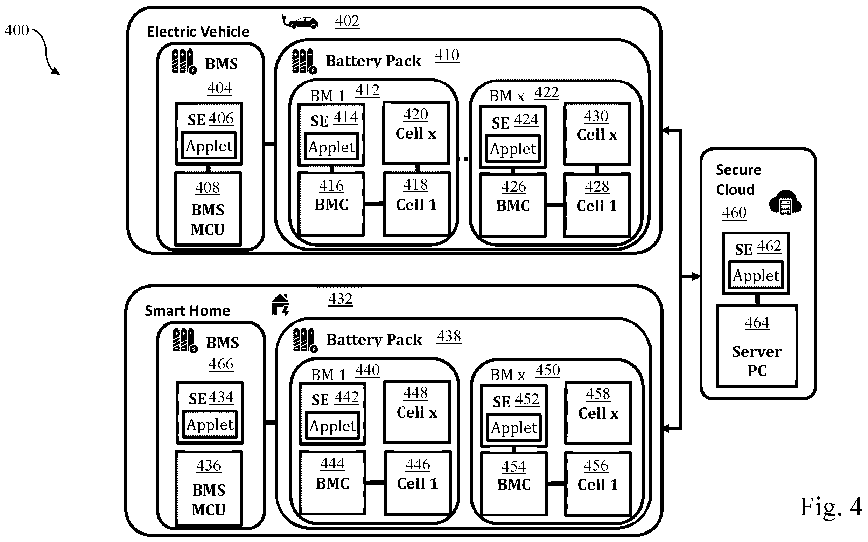

**Fig. 4** shows another illustrative embodiment of a battery management architecture 400. In particular, Fig. 4 shows an example of an implementation of the architecture shown in Fig. 3A. An electric vehicle 402 comprises a first battery system, which includes a battery pack 410 and a battery management unit implemented as a so-called battery management system (BMS) 404. The battery pack 410 comprises two or more battery modules 412, 422. Each battery module 412, 422 comprises two or more battery cells 418, 420, 428, 430 and a battery module controller 416, 426. Furthermore, each battery module 412, 422 comprises a secure element (SE) 414, 424 on which an applet is installed. The applet may be used to execute security-related functions. Furthermore, the BMS 404 also contains an SE 406 on which an applet for executing security-related functions is installed, as well as a microcontroller 408.

Furthermore, a smart home 432 comprises a second battery system, which includes a battery pack 438 and a battery management unit implemented as a BMS 466. The battery pack 438 comprises two or more battery modules 440, 450. Each battery module 440, 450 comprises two or more battery cells 446, 448, 456, 458 and a battery module controller 444, 454. Furthermore, each battery module 440, 450 comprises an SE 442, 452 on which an applet is installed. The applet may be used to execute security-related functions. Furthermore, the BMS 466 also contains an SE 434 on which an applet for executing security-related functions is installed, as well as microcontroller 436. Furthermore, a secure cloud server 460 comprises an SE 462 on which an applet for executing security-related functions is installed, as well as a server PC 464. The secure cloud server 460 implements a battery management server of the kind set forth.

The presently disclosed battery systems and battery management server facilitate preventing an unauthorized reuse of battery modules. Furthermore, the integrity of reused battery modules may be proven. More specifically, battery modules may be decoupled from a first battery system and coupled to a second battery system in a secure manner, i.e., by entities whose authorization can be verified. If a battery module reaches a certain age, it may no longer be usable for some applications, but still be suitable for other applications. An architecture as shown in Figs. 3A and 4 may allow only authorized stakeholders to make use of a purchased battery. This may, in turn, also offer a protection against theft of battery modules. Additionally, the presently disclosed battery systems and battery management server provide trust in reused battery modules. The integrity of battery-specific data (state of health, manufacturer certificate, lifecycle, etc.) may be ensured. These data are directly related to the value of a battery. Thus, when reusing a battery module, its value and proper functionality can be trusted to enhance overall user satisfaction, safety and performance.

The architecture contains different interrelated systems and devices, in particular a first battery system, a second battery system and a battery management server. The first battery system may for example be used in an electric vehicle, while the second battery system may be used in a smart home. Each of the first battery system and the second battery system comprises a plurality of battery modules and a battery management unit operatively coupled to the battery modules. The battery management unit may be implemented as a so-called battery management system (BMS). The BMS may have a built-in SE having a BMS applet installed thereon. Furthermore, the BMS applet may have been pre-provisioned with secure keys and certificates in a trusted secure environment. The trusted secure environment may be realized, for example, as the above-mentioned trust provisioning service or as a trusted environment implemented by a module manufacturer. In addition, the condition (lifecycle, re-charging cycles, state-of-health, etc.) of each battery module may frequently be updated in the BMS applet. The battery systems may be configured to transmit battery module conditions to the battery management server (e.g., a secure cloud server). This information may be used by a retailer to sell a module, and by a prospective buyer to monitor a current status of the module. Furthermore, the battery systems may support the pairing and unpairing of battery modules via secure over-the-air (OTA) services. Using these services, specific battery modules may also be provisioned and/or prepared for re-pairing.

Furthermore, the plurality of battery modules comprised in each battery system may be integrated into a so-called battery pack. Each battery module may have a SE on which the BMS applet is installed. Furthermore, each battery module may be identified by the BMS applet, using an identifier of the module which may also be stored in the module's SE. Furthermore, the applet installed on the module's SE may also securely store the module's conditions (lifecycle, re-charging cycles, state-of-health, etc.). Furthermore, the applet may have been pre-provisioned with secure keys and certificates in a trusted secure environment. The battery management server, which may be implemented as a secure cloud server managed by a service provider (SP), may also comprise an SE having a BMS cloud service applet installed thereon. The battery management server may regularly monitor the state or conditions of the battery modules via sync-ups with the battery management systems of the battery systems, based on a configurable sync-up schedule. The battery management server facilitates the transfer, in particular the pairing and unpairing, of battery modules from the first battery system to the second battery system.

Several use cases may be supported by the presently disclosed battery systems and battery management server. An example of such a use case is the reuse of an old electric vehicle battery pack in a smart home. In such a use case, the owner of the vehicle may see all the characteristics (lifecycle, re-charging cycles, state-of-health, etc.) of each battery module that is present in the electric vehicle and the smart home via an online client. The owner should then alert the cloud service provide that they intend to reuse a specific battery module from the vehicle in the smart home. Accordingly, the secure cloud server may initiate an unpairing mechanism. In this step the respective module may receive new certificates and keys that will be used for pairing the battery module with the smart home. The current BMS host applet may also be updated accordingly. The smart home host may also receive similar cryptographic objects and details about the module that it will receive. Then, the battery module may simply be un-plugged from the vehicle and re-plugged into the battery pack of the smart home. As soon as a new battery module is plugged into the battery pack of the smart home, an overall system check may take place along with an end-to-end authentication between the SE in the battery module and the SE in the BMS of the smart home. If the battery module is successfully authenticated and if it is in the same state as it was at the last check (performed by the electric vehicle), it may be added to the battery pack of the smart home.

Another example of a use case is the reuse of an old third-party vehicle battery pack in a smart home. In such a use case, the battery module is not only transferred from one battery system to another, but also the owner of the battery module will change. In such a use case, an owner of an electric vehicle may sell the old battery pack or specific modules thereof online or via registered entities to a third party. Thus, the third party may enhance its own smart home battery system by adding the used vehicle battery pack or modules thereto. Since the battery modules contain a SE with a BMS applet installed thereon, all their characteristics are known and may be easily monitored via the secure cloud. After the agreement (e.g., payment) between the current owner and the new owner, a battery pack/module manufacturer may help to unpair the battery pack from the vehicle and pair it to the smart home battery system by using the keys and certificates present in the SE. Since the battery modules already contain an SE with a BMS applet, only a remote provisioning of the keys/certificates may be needed. This may be done while the unpairing process takes place with the secure cloud.

A further example of a use case is the reuse of a vehicle battery pack for charging the vehicle. In such a use case, a vehicle battery pack of specific modules thereof may be added to an existing solar-powered vehicle charging battery system. More specifically, the vehicle battery pack of modules may be unpaired from the battery system of the vehicle and then then paired directly to the vehicle charging station using the secure cloud. Once connected, SE to SE authentication may take place and the reused battery pack or modules may help to improve the storage capacity of the charging system.

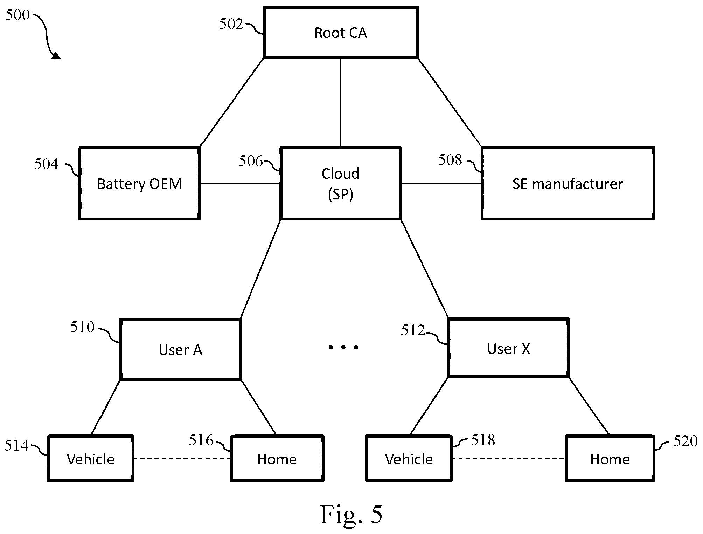

**Fig. 5** shows different roles 500 in a public key infrastructure (PKI) scheme. The root certificate authority (CA) 502 may for example be a consortium of original equipment manufacturers (OEMs) producing vehicles, battery manufacturers, smart home module manufacturers, semiconductor companies, or governmental departments (e.g., a EU driven consortium). The battery OEM 504 may be a company that produces battery modules. Furthermore, the SE manufacturer 508 may be a semiconductor company that applies secure trust provisioning. The cloud (SP) 506 may be a root entity that chooses and authorizes a service provider to sign and certify the requests from SE manufacturers 508 and the battery EOMs 504. Users A and X 510, 512 may be end users who buy battery modules (also if assembled inside the vehicle or in a complete smart home power bank). A vehicle OEM or a smart home battery system vendor may also be a user and sell its systems to the end user. In this example, user A 510 could be a vehicle manufacturer owning many vehicles and user X 512 could be an end user owning a vehicle (produced by user A 510) and/or a home (purchased from another user). Although only two users 510, 512 are shown in Fig. 5, the skilled person will appreciate that the scheme may be extended to include more than two users.

Based on the aforementioned roles, the following implementation of a battery module transfer scheme may be envisaged. It may be assumed that a battery manufacturer is a member of the consortium or a similar entity driven by the root CA 502. Furthermore, it may be assumed that the SE manufacturer 508 is registered as an official entity at the consortium as the sole issuer of signed requests and certificates which are attested by the consortium-defined service provider. Then, the battery manufacturer may sign a battery manufacturing agreement with the consortium. The battery manufacturer may also confirm that the SE manufacturer 508 will be managing the certificates and providing the SEs for the respective battery modules. While producing a battery pack, a certified and provisioned SE may be embedded into each battery module. The battery manufacturer may query the service provider 506 to verify the SE and also register the battery module. The current battery condition (lifecycle, re-charging cycles, state-of-health, etc.) which may be stored in the BMS applet (within the SE) of each module may also be synced with the cloud.

A first user may have to register the battery module separately with the service provider 506. This registration may be done via the battery manufacturer or separately. For example, a vehicle manufacturer may also register all battery modules in its newly produced vehicle. On the first registration, the battery conditions may be checked and then mapped to the rightful owner. This information may be saved in the cloud and in the BMS applet installed on the SE. The user may have full access to this information via the cloud and may also ask the service provider 506 to publish the battery characteristics to enable a secure reuse. In case of an application change, the user has the possibility to request for a battery module application change via the service provider 506. In this way, one or more battery modules from the vehicle may be reused securely in a smart home, for example. Accordingly, the mapping of the battery module may be updated in the cloud and the BMS applet on the SE of the battery module may receive the new certificates, which can be used for secure pairing with the battery system of the smart home. This process is relatively easy, because the ownership of the battery module remains unchanged.

In case of a change of ownership, a user who wants to sell or transfer ownership of a battery module may send a request to the service provider 506. The service provider 506 may then publish the battery module characteristics on a website which can be accessed by all registered users. Any interested user may then request a quote and if the buyer and the seller reach an agreement, the service provider 506 may start the process of ownership transfer. The service provider 506 may send a signed request to the current BMS which is connected to the battery module. This request may contain a new key pair, which may be used for the authentication of the battery module by the new BMS. The current battery profile may also be synced to the cloud in order to prevent any tampering in the transfer phase. The service provider 506 may also share the key pair with the new BMS for authentication of the battery module. The battery module may then be unpaired from the current battery system and may be locked for the new one. If the battery is lost or is misused in another battery system, the authentication will fail, and the module will be unusable. Once the module is plugged into the correct battery system, the authentication is performed successfully and then the battery characteristics may be fetched and compared to the last entry. If everything is in sync, the battery module may be used in the new battery system.

An example of a certificate that may be used is the X.509 certificate. Furthermore, an example of the keys that may be used are elliptic-curve cryptography (ECC) key pairs for the encryption and signature verification. Furthermore, trust provisioning of credentials (signed by the root CA 502) onto the SE may be accomplished by the SE manufacturer 508, based on a mutual agreement between the battery OEM 504 and the root CA 502 as well as a mutual agreement between the SE manufacturer 508 and the root CA 502.

The above-mentioned PKI scheme may be used in the following manner in case of a change of ownership. After receiving the ownership transfer request from user A 510, the service provider 506 may send a signed and encrypted request (i.e., encrypted using its private key) to the BMS of the vehicle registered to user A 506. The request may also contain the new key pair that will be used to authenticate with the BMS of user X 512. The BMS of user A 506 may verify and decrypt the request, using a pre-provisioned public key and decryption key. As per the request, the battery module may be unpaired and new keys may be provisioned in the BMS applet which is installed on the SE of the battery module. This will prepare the battery module for getting paired with the new battery system (i.e., with the battery system of user X 512). The current battery module characteristics (i.e., the condition information) may also be fetched and sent to the cloud (i.e., the SP 506) in a secure manner. Once the user X 512 connects the new battery module to his BMS, the system may scan the complete battery pack and share the details of the newly attached module with the SP 506. The SP 506 may again check the received battery module characteristics and if everything is correct, it may share the same keys with the BMS of user X 512. The BMS of user X 512 may then perform a pairing operation with the new battery module and after a final authentication, it may again send an encrypted and signed message to the SP 506, thereby confirming that the pairing was successful and informing the SP 506 that it should update its registry accordingly.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: electric vehicle
- 102: battery management system
- 104: microcontroller
- 106: battery pack
- 108: battery module 1
- 110: battery module controller
- 112: cell 1
- 114: cell x
- 116: battery module x
- 118: battery module controller
- 120: cell 1
- 122: cell x
- 200: smart home
- 202: battery management system
- 204: microcontroller of the battery management system
- 206: battery pack
- 208: battery module 1
- 210: battery module controller
- 212: cell 1
- 214: cell x
- 216: battery module x
- 218: battery module controller
- 220: cell 1
- 222: cell x
- 300: battery management architecture
- 302: first battery system
- 304: battery management unit
- 306: battery module
- 308: battery module
- 310: second battery system
- 312: battery management unit
- 314: battery module
- 316: battery module
- 318: battery management server
- 320: method of configuring a first battery system
- 322: providing a first battery system with a plurality of battery modules
- 324: providing the first battery system with a battery management unit operatively coupled to the battery modules, wherein the battery management unit contains a secure element, wherein the battery management unit is configured to receive a signed request from an external server, wherein the signed request is a request for decoupling at least one of the battery modules from the first battery system, and wherein the battery management unit is configured to verify the signed request using a public key stored in the secure element
- 326: method of configuring a second battery system
- 328: providing a second battery system with a plurality of battery modules
- 330: providing the second battery system with a battery management unit operatively coupled to the battery modules, wherein the battery management unit is configured to detect that a new battery module is inserted into the second battery system, wherein the battery management unit is configured to read, upon or after said detection, an identifier from a secure element contained in said new battery module, and wherein the battery management unit is configured to transmit said identifier to an external server
- 332: method of operating a battery management server
- 334: transmitting a signed request to an external first battery system, wherein said signed request is a request for decoupling at least one of a plurality of battery modules from the first battery system
- 336: transmitting cryptographic keys and/or cryptographic certificates to an external second battery system, wherein said cryptographic keys and/or cryptographic certificates enable the second battery system to couple battery modules which have been decoupled from the first battery system to the second battery system
- 338: secure element
- 340: secure element
- 342: secure element
- 344: secure element
- 346: secure element
- 348: secure element
- 350: secure element
- 400: battery management architecture
- 402: electric vehicle
- 404: battery management system
- 406: secure element
- 408: microcontroller
- 410: battery pack
- 412: battery module 1
- 414: secure element
- 416: battery module controller
- 418: cell 1
- 420: cell x
- 422: battery module x
- 424: secure element
- 426: battery module controller
- 428: cell 1
- 430: cell x
- 432: smart home
- 434: secure element
- 436: microcontroller
- 438: battery pack
- 440: battery module 1
- 442: secure element
- 444: battery module controller
- 446: cell 1
- 448: cell x
- 450: battery module x
- 452: secure element
- 454: battery module controller
- 456: cell 1
- 458: cell x
- 460: secure cloud server
- 462: secure element
- 464: server PC
- 466: battery management system
- 500: roles in a public key infrastructure scheme
- 502: root certificate authority
- 504: battery original equipment manufacturer
- 506: cloud (service provider)
- 508: secure element manufacturer
- 510: user A
- 512: user X
- 514: vehicle
- 516: home
- 518: vehicle
- 520: home

## Claims

1. A first battery system, comprising:
a plurality of battery modules;
a battery management unit operatively coupled to the battery modules, wherein the battery management unit contains a secure element;
wherein the battery management unit is configured to receive a signed request from an external server, wherein the signed request is a request for decoupling at least one of the battery modules from the system, and wherein the battery management unit is configured to verify the signed request using a public key stored in the secure element.

2. The system of claim 1, wherein the signed request has been encrypted by the external server, and wherein the battery management unit is further configured to decrypt the request using a decryption key stored in the secure element.

3. The system of claim 1 or 2, wherein the battery management unit is further configured to transmit condition information to the external server, wherein the condition information is indicative of a condition of one or more of said battery modules, and wherein the battery management unit has read said condition information from secure elements contained in said battery modules.

4. The system of claim 3, wherein the condition information includes data indicative of a lifecycle, data indicative of re-charging cycles, data indicative of a state of health of the battery modules, and/or data indicative of a manufacturer of the battery modules.

5. The system of any preceding claim, wherein the battery management unit is further configured to receive cryptographic keys and/or cryptographic certificates from the external server, and wherein the battery management unit is configured to store the cryptographic keys and/or cryptographic certificates in a secure element of the at least one of the battery modules to be decoupled.

6. A method of configuring a first battery system, comprising:
providing the system with a plurality of battery modules;
providing the system with a battery management unit operatively coupled to the battery modules, wherein the battery management unit contains a secure element;
wherein the battery management unit is configured to receive a signed request from an external server, wherein the signed request is a request for decoupling at least one of the battery modules from the system, and wherein the battery management unit is configured to verify the signed request using a public key stored in the secure element.

7. A second battery system, comprising:
a plurality of battery modules;
a battery management unit operatively coupled to the battery modules;
wherein the battery management unit is configured to detect that a new battery module is inserted into the system, wherein the battery management unit is configured to read, upon or after said detection, an identifier from a secure element contained in said new battery module, and wherein the battery management unit is configured to transmit said identifier to an external server.

8. The system of claim 7, wherein the battery management unit is configured to receive, in response to transmitting said identifier, cryptographic keys and/or cryptographic certificates, and wherein the battery management unit is configured to couple the new battery module to the system using said cryptographic keys and/or cryptographic certificates.

9. The system of claim 8, wherein the cryptographic keys and/or cryptographic certificates have been pre-provisioned in the secure element of the new battery module by the external server.

10. The system of any one of claims 7 to 9, wherein the battery management unit is further configured to transmit condition information to be verified to the external server, wherein the condition information is indicative of a condition of the new battery module.

11. The system of claim 10, wherein the battery management unit is configured to couple the new battery module to the system after receiving a positive verification result from the external server, wherein said positive verification result indicates that the condition information matches an expected condition.

12. A method of configuring a second battery system, comprising:
providing the system with a plurality of battery modules;
providing the system with a battery management unit operatively coupled to the battery modules;
wherein the battery management unit is configured to detect that a new battery module is inserted into the system, wherein the battery management unit is configured to read, upon or after said detection, an identifier from a secure element contained in said new battery module, and wherein the battery management unit is configured to transmit said identifier to an external server.

13. A battery management server, configured to:
transmit a signed request to an external first battery system, wherein said signed request is a request for decoupling at least one of a plurality of battery modules from the first battery system;
transmit cryptographic keys and/or cryptographic certificates to an external second battery system, wherein said cryptographic keys and/or cryptographic certificates enable the second battery system to couple battery modules which have been decoupled from the first battery system to the second battery system.

14. A method of operating a battery management server, comprising:
transmitting a signed request to an external first battery system, wherein said signed request is a request for decoupling at least one of a plurality of battery modules from the first battery system;
transmitting cryptographic keys and/or cryptographic certificates to an external second battery system, wherein said cryptographic keys and/or cryptographic certificates enable the second battery system to couple battery modules which have been decoupled from the first battery system to the second battery system.

## Amended claims

### Amended claims in accordance with Rule 137(2) EPC.

1. A first battery system (302), comprising:
a plurality of battery modules (306, 308);
a battery management unit (304) operatively coupled to the battery modules (306, 308), wherein the battery management unit (304) contains a secure element (338);
wherein the battery management unit (304) is configured to receive a signed request from an external server (318);
**characterized in that** the signed request is a request for decoupling at least one of the battery modules (306, 308) from the system (302), and wherein the battery management unit (304) is configured to verify the signed request using a public key stored in the secure element (338).

2. The system (302) of claim 1, wherein the signed request has been encrypted by the external server (318), and wherein the battery management unit (304) is further configured to decrypt the request using a decryption key stored in the secure element (338).

3. The system (302) of claim 1 or 2, wherein the battery management unit (304) is further configured to transmit condition information to the external server (318), wherein the condition information is indicative of a condition of one or more of said battery modules (306, 308), and wherein the battery management unit (304) has read said condition information from secure elements (340, 342) contained in said battery modules (306, 308).

4. The system (302) of claim 3, wherein the condition information includes data indicative of a lifecycle, data indicative of re-charging cycles, data indicative of a state of health of the battery modules (306, 308), and/or data indicative of a manufacturer of the battery modules.

5. The system (302) of any preceding claim, wherein the battery management unit (304) is further configured to receive cryptographic keys and/or cryptographic certificates from the external server (318), and wherein the battery management unit (304) is configured to store the cryptographic keys and/or cryptographic certificates in a secure element of the at least one of the battery modules to be decoupled.

6. A method (320) of configuring a first battery system, comprising:
providing (322) the system with a plurality of battery modules;
providing (324) the system with a battery management unit operatively coupled to the battery modules, wherein the battery management unit contains a secure element;
wherein the battery management unit is configured to receive a signed request from an external server;
**characterized in that** the signed request is a request for decoupling at least one of the battery modules from the system, and wherein the battery management unit is configured to verify the signed request using a public key stored in the secure element.

7. A second battery system (310), comprising:
a plurality of battery modules (314, 316);
a battery management unit (312) operatively coupled to the battery modules (314, 316);
wherein the battery management unit (312) is configured to read an identifier from a secure element contained in a new battery module, and wherein the battery management unit is configured to transmit said identifier to an external server (318);
**characterized in that** the battery management unit (312) is configured to detect that said new battery module is inserted into the system (310), and wherein the battery management unit (312) is configured to read the identifier from the secure element and transmit said identifier to the external server (318) upon or after said detection.

8. The system (310) of claim 7, wherein the battery management unit (312) is configured to receive, in response to transmitting said identifier, cryptographic keys and/or cryptographic certificates, and wherein the battery management unit (312) is configured to couple the new battery module to the system (310) using said cryptographic keys and/or cryptographic certificates.

9. The system (310) of claim 8, wherein the cryptographic keys and/or cryptographic certificates have been pre-provisioned in the secure element of the new battery module by the external server (318).

10. The system (310) of any one of claims 7 to 9, wherein the battery management unit (312) is further configured to transmit condition information to be verified to the external server (318), wherein the condition information is indicative of a condition of the new battery module.

11. The system (310) of claim 10, wherein the battery management unit (312) is configured to couple the new battery module to the system (310) after receiving a positive verification result from the external server (318), wherein said positive verification result indicates that the condition information matches an expected condition.

12. A method (326) of configuring a second battery system, comprising:
providing (328) the system with a plurality of battery modules;
providing (330) the system with a battery management unit operatively coupled to the battery modules;
wherein the battery management unit is configured to read an identifier from a secure element contained in a new battery module, and wherein the battery management unit is configured to transmit said identifier to an external server;
**characterized in that** the battery management unit is configured to detect that said new battery module is inserted into the system, and wherein the battery management unit is configured to read the identifier from the secure element and transmit said identifier to the external server upon or after said detection.

13. A battery management server (318), configured to:
transmit a signed request to an external first battery system (302);
**characterized in that** said signed request is a request for decoupling at least one of a plurality of battery modules from the first battery system (302);
and wherein the battery management server (318) is further configured to transmit cryptographic keys and/or cryptographic certificates to an external second battery system (310), wherein said cryptographic keys and/or cryptographic certificates enable the second battery system (310) to couple battery modules which have been decoupled from the first battery system (302) to the second battery system (310).

14. A method (332) of operating a battery management server, comprising:
transmitting (334) a signed request to an external first battery system;
**characterized in that** said signed request is a request for decoupling at least one of a plurality of battery modules from the first battery system;
and wherein the method (332) further comprises transmitting (336) cryptographic keys and/or cryptographic certificates to an external second battery system, wherein said cryptographic keys and/or cryptographic certificates enable the second battery system to couple battery modules which have been decoupled from the first battery system to the second battery system.
